# EUROPÄISCHE PATENTANMELDUNG

(11) **EP 4 470 779 A1**
(43) Veröffentlichungstag der Anmeldung: **04.12.2024**
(21) Anmeldenummer: 23204707.6
(22) Anmeldetag: 19.10.2023
(51) Int. Cl.: B32B 37/12, H01F 41/02, H02K 15/02

(54) **VERFAHREN ZUM VERBINDEN VON BLECHTEILEN ZU ZUMINDEST EINEM BLECHPAKET**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es wird ein Verfahren zum Verbinden von Blechteilen (4) zu zumindest einem Blechpaket (2) gezeigt. Um ein gegenüber Kühlflüssigkeit standfestes Blechpaket (2) zu schaffen, wird vorgeschlagen, dass Blechteile (4) gestapelt werden, die an ihren ersten Schmelzklebelackschichten (5a) zumindest bereichsweise, insbesondere vollflächig, ein durch Prägen erzeugtes Relief (15) aufweisen.

## Beschreibung

Die Erfindung betrifft ein Verfahren zum Verbinden von Blechteilen zu zumindest einem Blechpaket, bei dem Blechteile, die jeweils an ihrer ersten Flachseite eine erste, vorzugsweise vollflächig vorgesehene und/oder thermisch aktivierbare, Schmelzklebelackschicht, insbesondere Backlack, aufweisen, gestapelt und durch Aktivierung der Schmelzklebelackschichten zum Blechpaket verklebt werden.

Um Blechpakete aus laminierten Blechteilen herzustellen, ist es bekannt, Blechteile zu stapeln und miteinander zu verkleben, nämlich durch Aktivierung der Schmelzklebelackschicht zwischen den Blechteilen. Das Vereinzeln der Blechteile erfolgt oftmals mithilfe eines Folgestanzwerkzeugs, das von einem mit Schmelzklebelack beschichteten Elektroband diese durch Stanzen abtrennt. Werden die Blechpakete mit einer Kühlflüssigkeit gekühlt, bedarf es einer flüssigkeitsdichten Anbindung zwischen den Blechteilen, um eine Leckage an Flüssigkeit zu vermeiden, die aus dem Blechpaket austritt oder in das Blechpaket eintritt. Nachteilig sind flüssigkeitsdichte Blechpakete mit erhöhtem Kühlbedarf mit oftmals vergleichsweise hohen hydraulischen Drücken sind schwierig herzustellen.

Die Erfindung hat sich daher ausgehend vom eingangs geschilderten Blechpaket die Aufgabe gestellt, die stoffschlüssige Anbindung zwischen den Blechteilen zu verbessern, um damit eine flüssigkeitsdichtes Blechpaket zu schaffen, das selbst vergleichsweise hohen hydraulischen Drücken standhalten kann. Zudem soll das Verfahren einfach handzuhaben sein.

Die Erfindung löst die gestellte Aufgabe durch die Merkmale des Anspruchs 1.

Indem Blechteile gestapelt werden, die an ihren ersten Schmelzklebelackschichten zumindest bereichsweise ein durch Prägen erzeugtes Relief aufweisen, kann überraschend die stoffschlüssige Anbindung zwischen den Blechteilen hinsichtlich einer flüssigkeitsdichten Anbindung deutlich verbessert werden. Das Relief der Schmelzklebelackschicht unterbricht beispielsweise herstellungsbedingte Schwankungen in der Schichtdicke der Schmelzklebelackschicht und/oder auch in der Planheit der Blechteile zuverlässig, was eine Ausbildung von kanalartigen Verbindungen in der Verklebung zwischen zwei Blechteilen verhindert. Zudem kann das Relief Lufteinschlüsse und/oder Hohlräume minimieren, was die Qualität der stoffschlüssigen Verbindung weiter verbessern sowie ein Risiko von Schwachstellen weiter reduzieren kann. Beispielsweise kann damit das erfindungsgemäße Verfahren die Dichtheit des Blechpakets gegenüber Leckage an Kühlflüssigkeit verbessern.

Vorstehendes kann beispielsweise verbessert werde, wenn das Relief vollflächig erzeugt wird. Es kann aber bereits ausreichen, wenn das Relief geschlossen um einen Kühlkanal im Blechpaket und/oder geschlossen entlang des Blechpaketmantels verläuft.

Auch ist ein Prägen in der Handhabung vergleichsweise einfach. Beispielsweise kann das Relief der ersten Schmelzklebelackschicht mit einem Prägewerkzeug erzeugt werden, das ausschließlich die erste Schmelzklebelackschicht prägt.

Das erfindungsgemäße Blechpaket ist daher zuverlässig und das auch bei vergleichsweise hohen Flüssigkeitsdrücken gegenüber Leckage deutlich standfester.

Vorzugsweise weist das Relief Vertiefungen und von diesen Vertiefungen sich abhebende Reliefstrukturen auf, um damit gegenläufige Toleranzen an den stoffschlüssig zu fügenden Blechteilen sicher minimieren zu können.

Als ausreichend für eine hohe Standfestigkeit kann sich beispielsweise ein Blechpaket dadurch auszeichnen, in dem die Reliefstrukturen eine Strukturhöhe von mindestens 5 µm und/oder eine Strukturhöhe im Bereich von 1,1- bis 5-mal der Schichtdicke der ersten und Schmelzklebelackschicht vor deren Prägung aufweisen. Vorzugsweise weisen die Reliefstrukturen eine Strukturhöhe im Bereich von 1,5- bis 3-mal der Schichtdicke der ersten Schmelzklebelackschicht vor deren Prägung auf.

Alternativ oder zusätzlich ist vorstellbar, dass die Reliefstrukturen eine Strukturbreite von mindestens 50 µm aufweisen.

Beispielsweise weisen die Vertiefungen eine maximale Vertiefungsweite zwischen zwei nacheinander angeordneten Reliefstrukturen von mindestens 200 µm auf, damit bei einem geforderten geringen Abstand der einzelnen Blechteile zueinander auch ein ausreichendes Volumen zur Verdrängung der Reliefstrukturen zur Verfügung steht. Kompakte Blechpakete mit einem vergleichsweise hohen magnetischen Anteil können damit beispielsweise geschaffen werden. Hierbei kann sich beispielsweise auszeichnen, wenn die Vertiefungen eine maximale Vertiefungsweite zwischen zwei nacheinander angeordneten Reliefstrukturen von mindestens 500 µm aufweisen. Vorzugsweise ist dies die maximale Vertiefungsweite in Längserstreckung des Reliefs gesehen.

Vorzugsweise ist das Verhältnis von Strukturhöhe der Reliefstrukturen zur maximalen Vertiefungsweite der Vertiefungen kleiner 1 :200, um damit selbst kleinste Unebenheiten oder Fehlstellen an der Verklebungsstelle ausgleichen zu können. Dies erhöht die Druckbeständigkeit des Blechpakets weiter. Vorzugsweise liegt dieses Verhältnis im Bereich von 1:20 bis 1:120, beispielsweise im Bereich von 1:20 bis 1:50.

Bildet das Relief ein Muster mit einer regelmäßigen Struktur aus, kann diese zur Homogenität der Verklebung zwischen den Blechteilen weiter beitragen. Insbesondere dann, wenn das Muster ein Noppenmuster, Rillenmuster, Gittermuster, Schachbrettmuster, Waffelmuster oder Wabenmuster ist. Hierbei kann es sich auch um ein Muster mit einer periodischen Struktur handeln.

Vorzugsweise weist jedes Blechteil an seiner zweiten, der ersten gegenüberliegenden Flachseite eine zweite Schmelzklebelackschicht auf. Das Relief der zweiten Schmelzklebelackschicht liegt damit an der ersten Schmelzklebelackschicht an, was die Wirksamkeit des Reliefs zur Ausbildung eines flüssigkeitsdichten Anschlusses weiter erhöht. Beispielsweise kann damit eine Scherfestigkeit der stoffschlüssigen Verbindung zwischen den Blechteilen weiter verbessert werden, was rotierende Blechpakete widerstandsfähiger gegenüber Leckage machen kann.

Beispielsweise ist die zweite Schmelzklebelackschicht plan ausgebildet, was das Verkleben mit der geprägten ersten Schmelzklebelackschicht weiter verbessert.

Alternativ oder zusätzlich ist vorstellbar, dass die zweite Schmelzklebelackschicht eine Schichtdicke im Bereich von 0,5 bis kleiner 2 µm aufweist. Insbesondere kann ausreichen, wenn diese Schichtdicke der zweiten Schmelzklebelackschicht im Bereich von 1 bis 1,5 µm liegt.

Besonders wirksam zur Herstellung eines flüssigkeitsdichten Blechpakets kann beispielsweise sein, wenn beim Stapeln und/oder nach dem Stapeln, insbesondere beim Verkleben, der Blechteile ein Druck, insbesondere zumindest 2 N/mm², auf die Blechteile aufgebracht wird. Das auf Druck belastete Reliefs kann dadurch Maßtoleranzen prozesssicher folgen, was die Standfestigkeit des Blechpakets gegenüber vergleichsweise hohen hydraulischen Drücken weiter erhöhen kann. Zum Aufbringen eines Drucks kann beispielsweise durch eine Druckeinrichtung, beispielsweise durch einen Drücker, erfolgen. Die Druckeinrichtung kann beispielsweise auf den Stapel drücken und so auf die Blechteile und damit auch auf die Schmelzklebelackschichten einen Druck aufbringen.

Vorzugsweise wird mit einem Prägewerkzeug die erste Schmelzklebelackschicht geprägt. Beispielsweise ist dieses Prägewerkzeug eine Prägewalze und/oder ein Prägestempel, was bei einem kontinuierlichen Verfahren zur Herstellung von Blechpaketen beispielsweise einfach vorgesehen werden kann.

Das Blech des Blechteils kann durch das Prägen unversehrt sein, wenn das Prägewerkzeug die erste Schmelzklebelackschicht mit einer Prägetiefe kleiner gleich als ihrer Schichtdicke prägt.

Wird die Schmelzklebelackschicht auf eine erste Temperatur erwärmt wird und dann das Relief erzeugt, kann dies die Einbringung des Reliefs in der Genauigkeit verbessern und damit die zur Ausbildung einer standfesten Verklebung weiter erhöhen. Alternativ oder zusätzlich ist vorstellbar, dass das Relief mit einem auf eine zweite Temperatur erwärmten Prägewerkzeug erzeugt wird.

Vorzugsweise ist die erste und/oder zweite Temperatur größer der Glasübergangstemperatur (Tg) des Schmelzklebelacks und kleiner der Verbackungstemperatur des Schmelzklebelacks, um damit trotz des vergleichsweise weichen Zustands und der damit vereinfachten Prägung eine Aushärtung des Schmelzklebelacks zu vermeiden.

Das Verfahren kann weiter vereinfacht werden, wenn die Blechteile von zumindest einem Elektroband oder -blech, das an seiner ersten Bandflachseite die erste, vorzugsweise vollflächig vorgesehene und/oder thermisch aktivierbare, Schmelzklebelackschicht vereinzelt werden.

Das Elektroband oder -blech kann beispielsweise auch auf der an seiner zweiten Bandflachseite die zweite, vorzugsweise vollflächig vorgesehene und/oder thermisch aktivierbare, Schmelzklebelackschicht aufweisen. Die erste und/oder zweite Schmelzklebelackschicht kann beispielsweise eine Backlackschicht sein.

Vorzugsweise wird das Relief vor dem Vereinzeln der Blechteile an der ersten Schmelzklebelackschicht erzeugt. Dies kann beispielsweise vor einem Folgestanzwerkzeug zum Vereinzeln der Blechteile der Fall sein, um die Handhabung des Verfahrens weiter zu erleichtern.

Zudem ist vorstellbar, dass das Blechpaket einen Kühlkanal zur Führung einer Kühlflüssigkeit aufweist. Dieser Kühlkanal kann das Blechpaket auch vollständig durchdringen.

Alternativ oder zusätzlich kann auch ein Paketmantel des Blechpakets abschnittsweise einen Kühlkanal zur Führung einer Kühlflüssigkeit ausbilden.

Die Erfindung hat sich daher die Aufgabe gestellt, ein flüssigkeitsdichtes Blechpaket zu schaffen, das selbst vergleichsweise hohen hydraulischen Drücken standhalten kann.

Die Erfindung löst die gestellte Aufgabe durch die Merkmale des Anspruchs 19.

Weist die von den ersten Schmelzklebelackschichten oder von den ersten und zweiten Schmelzklebelackschichten ausgebildete Verklebung zwischen den Blechteilen des Blechpakets zumindest bereichsweise ein Relief auf, kann durch die Druckbeständigkeit des Blechpakets deutlich erhöht werden. Insbesondere das Relief dazu beitragen, Unebenheiten zwischen einander anschließenden Blechteilen und/oder zwischen einander anschließenden Schmelzklebelackschichten ausgleichen und damit abdichten.

In den Figuren ist beispielsweise der Erfindungsgegenstand anhand eines Ausführungsbeispiels näher dargestellt. Es zeigen
- Fig. 1: eine schematische Darstellung einer Vorrichtung zur Durchführung des erfindungsgemäßen Verfahrens,
- Fig. 2: eine schematische Draufsicht auf eine erste und abgerissen dargestellte Schmelzklebelackschicht nach einem Prägen mithilfe der Vorrichtung nach Fig. 1,
- Fig. 2a: eine Photographie zu einem Teil der geprägten Schmelzklebelackschicht der Fig. 2,
- Fig. 3: eine vergrößerte schematische Darstellung eines Verfahrensschritts der Verklebung des Paketierverfahrens des Blechpakets mithilfe der Vorrichtung nach Fig. 1,
- Fig. 4a: eine vergrößerte Ansicht des Prägeschritts der Fig. 1 und
- Fig. 4b: eine vergrößerte Draufsicht auf ein Element des Prägemusters der Fig. 2.

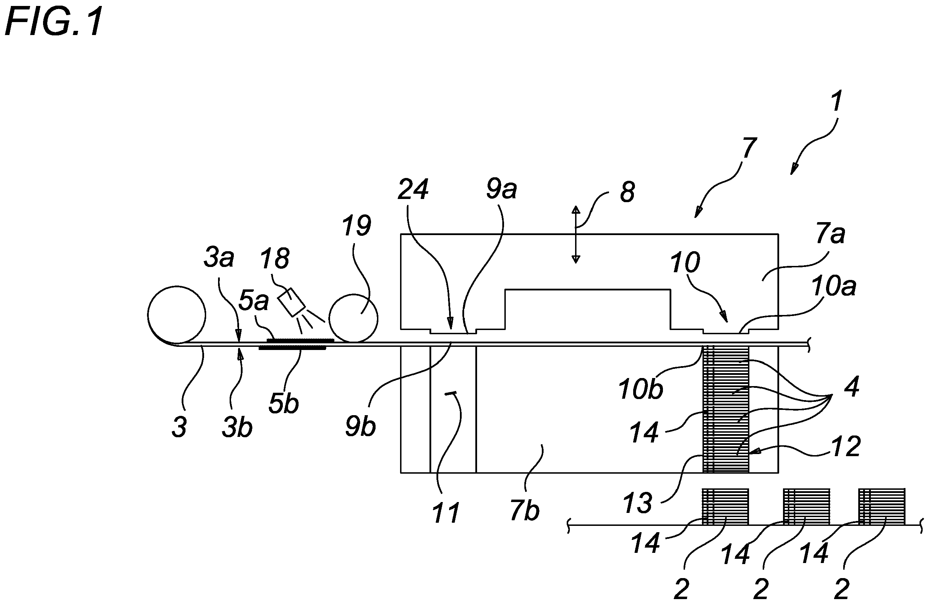

Nach der Figur 1 ist eine Vorrichtung 1 dargestellt, mit der Blechpakete 2 hergestellt werden, welches vorzugsweise für elektromagnetische Bauteile, beispielsweise für elektrische Maschinen, verwendet wird. Ein derartiges Verfahren wird auch oftmals Paketierverfahren genannt.

Hierzu werden durch die Vorrichtung 1 aus einem Elektroband 3 (oder nicht dargestellt aus einem Elektroblech) mehrere Blechteile 4 durch beispielsweise Abtrennen vereinzelt. Diese Blechteile 4 werden oftmals auch als Lamellen bezeichnet. Das Elektroband 3 weist typischerweise eine Eisen-Silizium-Legierung auf. Zudem ist das Elektroband 3 auf der ersten Bandflachseite 3a mit einer ersten thermohärtbaren Schmelzklebelackschicht 5a und auf der zweiten Bandflachseite 3b mit einer zweiten thermohärtbaren Schmelzklebelackschicht 5b beschichtet, und zwar sind diese Schmelzklebelackschichten 5a, 5b auf diesen beiden Bandflachseiten 3a, 3b wie beispielsweise dargestellt vollflächig vorgesehen. Nicht dargestellt ist ein Elektroband, das lediglich auf einer Bandflachseite 3a oder 3b die erste Schmelzklebelackschicht 5a, nämlich wie beispielsweise dargestellt vollflächig, aufweist, was für die Versuche V1, V3, V7 und V11 nach Tabelle 2 Verwendung findet.

Die erste und/oder zweite thermohärtbare und damit thermisch aktivierbare Schmelzklebelackschicht 5a, 5b weist beispielsweise eine Epoxydharzbasis auf. Solch eine thermohärtbare und damit heißhärtende Schmelzklebelackschicht 5a, 5b bzw. Schmelzklebstoffschicht ist auch unter der Bezeichnung "Backlack" bekannt ist. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Elektroband 3 im B-Zustand. Damit ist der teilvernetzte Schmelzklebelack reaktionsfähig. Durch Wärmezufuhr reagiert der sich im B-Zustand befindende Schmelzklebelack weiter und kann damit in den vollvernetzten C-Zustand übergeführt werden - was auch als Verbacken bezeichnet wird. Typischerweise hat diese teilvernetzte Schmelzklebelackschicht 5a, 5b eine Dicke von einigen Mikrometern. Die Glasübergangstemperatur Tg des beispielsweise verwendeten Schmelzklebelacks im Bereich von 65 bis 85 °C (Grad Celsius), gemessen nach ISO 11357-2, liegen. Die Verbackungstemperatur des beispielsweise verwendeten Schmelzklebelacks liegt im Bereich größer gleich 180 Grad. Diese Kennwerte zur Glasübergangstemperatur und Verbackungstemperatur können aber entsprechend dem verwendeten Schmelzklebelack variieren.

Vom backlackbeschichteten Elektroband 3 werden mithilfe eines Stanzwerkzeugs 7, nach Fig. 1 mithilfe eines Folgestanzwerkzeugs bzw. Folgeverbundwerkzeugs, mehrere Blechteile 4 freigestanzt und damit vereinzelt. Solch ein Freistanzen kann - im Allgemeinen erwähnt - ein Ausschneiden, Abschneiden, Ausklinken, Beschneiden, Zerteilen durch Ausdrücken etc. sein. Es ist aber auch ein Ausdrücken von Blechteilen 4 vorstellbar. Vorzugsweise beträgt die Dicke jedes Blechteils 4 zwischen 0,09 und 0,49 mm (Millimeter) und die Dicke jeder Schmelzklebelackschicht 5a, 5b beispielsweise zwischen 2 und 12 µm (Mikrometer).

Damit weisen jene vom einseitig beschichteten Elektroband 1 vereinzelten Blechteile 4 jeweils an ihrer ersten Flachseite 4a die erste Schmelzklebelackschicht 5a auf. Jene vom beidseitig beschichteten Elektroband 1 vereinzelten Blechteile 4 weisen jeweils an ihrer ersten Flachseite 4a die erste Schmelzklebelackschicht 5a und an ihrer zweiten Flachseite 4b die zweite Schmelzklebelackschicht 5b auf.

Wie außerdem der Fig. 1 zu entnehmen, führt das Stanzwerkzeug 7 ein Schneiden mit mehreren Hüben 8 durch, indem sein Oberwerkzeug 7a mit seinem Unterwerkzeug 7b zusammenwirkt. Hierzu weist das Stanzwerkzeug 7 mehrere Stanzstufen 9, 10 auf. Mit einem ersten Stempel 9a der Vorbearbeitungsstanzstufe 9 am Oberwerkzeug 7a wird das Elektroband 3 für ein Freistanzen vorbearbeitet, wonach mit einem zweiten Stempel 10a der zweiten und im Ausführungsbeispiel auch letzten Stanzstufe 10 am Oberwerkzeug 7a aus dem Elektroband 3 Blechteile 4 freigestanzt, also vereinzelt werden. Hierzu wirken die Stempel 9a, 10a mit den jeweiligen Matrizen 9b, 10b der betreffenden Stanzstufen 9, 10 am Unterwerkzeug 7b zusammen. Solch ein Folgeschneiden ist in der Fig. 1 unter anderem daran zu erkennen, dass beim Vorbearbeitungsstanzen ein Teil 11 vom Elektroband 3 abgetrennt wird, um beispielsweise das Elektroband 3 für den Kühlkanal 14 im Blechpaket 2 vorzubereiten.

Jene, mithilfe der Stanzstufe 10 freigestanzten Blechteile 4 werden durch Druck P des Oberwerkzeugs 7a bzw. des Stempels 10a in die Matrize 10b, in weitere Folge in eine an die Matrize 10b anschließende Stapeleinrichtung 12 gedrängt und damit gestapelt. Die Stapeleinrichtung 12 umfasst hierzu einen Schacht 13 mit einer aus dem Stand der Technik bekannten Paketbremse, um die Blechteile 4 in der Stapeleinrichtung 12 zu halten. Alternativ oder zusätzlich ist auch ein nicht näher dargestellter Gegenhalter vorstellbar.

In dieser Stapeleinrichtung 12 werden die Blechteile 4 aufeinandergestapelt. Die Stapeleinrichtung 12 wird hierzu aktiv beheizt, beispielsweise mit einer elektrischen Heizung, was nicht näher dargestellt ist. Damit werden die Schmelzklebelackschichten 5a, 5b auf eine dritte Temperatur gebracht, die über einer Glasübergangstemperatur Tg deren jeweiligen Schmelzklebelacks liegt, nämlich auf eine dritte Temperatur bei 100 °C (100 Grad Celsius). Damit werden die Blechteile 4 zu einem Blechpaket 2 verklebt, was ein Endverkleben oder Vorverkleben sein kann. Bei letzterem können die Blechpakete 2 zumindest einem nicht dargestellten weiteren Aushärtungsschritt nach dem Verlassen der Stapeleinrichtung 12 unterworfen werden, um die stoffschlüssige Verbindung zwischen den Blechteilen 4 auszuhärten bzw. zu verbacken. Des Weiteren besteht die Möglichkeit einer Drehung der Stapeleinrichtung 12, um beispielsweise segmentierte Blechpakete 2 aus Lagen mit mehreren nebeneinander angeordneten und übereinander gestapelten Blechteilen 4 auszubilden - was ebenfalls nicht dargestellt ist. Alle aufeinandergestapelten Blechteile 4 verlassen die Stapeleinrichtung 12 als Blechpakete 2 bzw. werden beim oder nach dem Verlassen der Stapeleinrichtung 12 in Blechpakete 2 getrennt - was nicht dargestellt wurde.

Wie in der Fig. 1 zu erkennen, weisen die Blechpakete 2 einen durchgehenden Kühlkanal 14 auf, der zur Führung einer Kühlflüssigkeit zur beispielsweise aktiven Kühlung des Blechpaketes 2 im Betrieb ausgebildet ist. Das Blechpaket 2 muss daher hydraulischen Drücken leckagefrei standhalten, welche Drücke bei Hochleistungsantrieben vergleichsweise hoch ausfallen können.

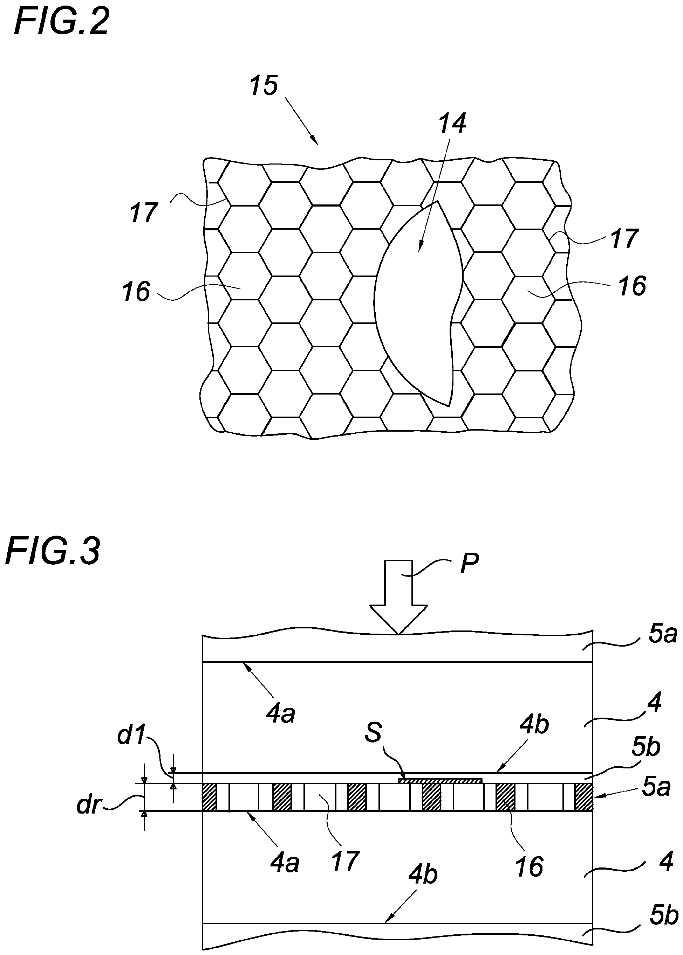

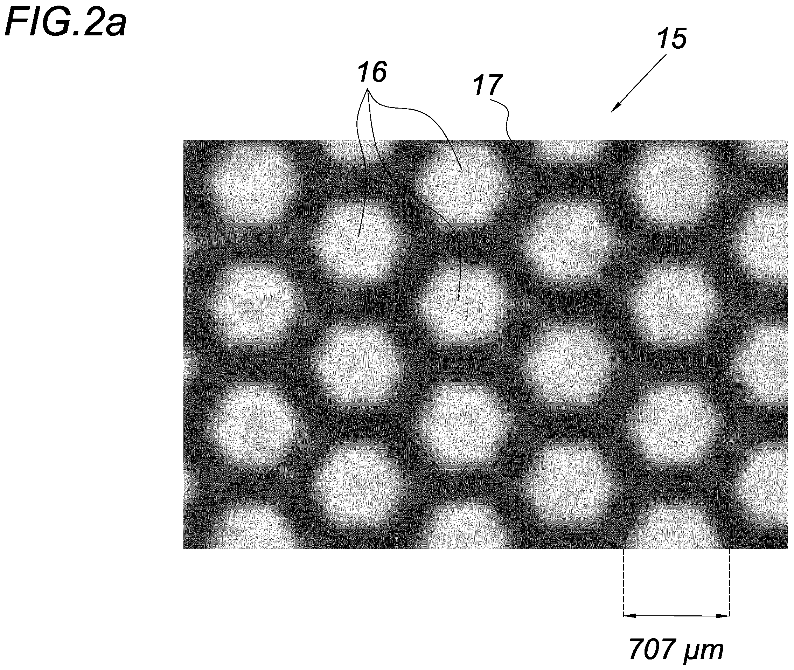

Erfindungsgemäß wird dies sichergestellt, indem Blechteile 4 gestapelt werden, die an deren ersten Schmelzklebelackschicht 5a zumindest bereichsweise, nämlich im Ausführungsbeispiel vollflächig, ein durch Prägen erzeugtes Relief 15 aufweisen, wie dies in Fig. 2 und Fig. 2a erkannt werden kann. Hierfür weist die Vorrichtung 1 eine Prägewalze als Prägewerkzeug 19 auf, das an der ersten Schmelzklebelackschicht 5a auf dem Elektroband 3 das Relief 15 erzeugt, bevor dieses in das Stanzwerkzeug 7 einläuft. Es ist aber auch vorstellbar, dass das Relief 15 an der jeweiligen ersten Schmelzklebelackschicht 5a auf dem Blechteil 4 erzeugt wird, also nach einem Vereinzeln der Blechteile 4, was nicht näher dargestellt worden ist. Das Prägewerkzeug 19 prägt im Ausführungsbeispiel ausschließlich die erste Schmelzklebelackschicht 5a.

Nach Tabelle 1 sind verschiedenste Arten 1_A bis 3_C von Reliefs 15 der ersten Schmelzklebelackschicht 5a im Vergleich mit dem Stand der Technik (SdT) dargestellt.

**Tabelle 1: diverse Oberflächen der ersten Schmelzklebelackschicht 5a**

| | Schichtdicke d1 [µm] | Strukturhöhe dr [µm] | Strukturbreite sbr [µm] | Maximale Vertiefungsweite kp [µm] | Verhältnis sbr/kp |
|---|---|---|---|---|---|
| SdT | 6 | - | - | - | |
| 1_A | 6 | 12 | 50 | 282,8 | 1:23,6 |
| 1_B | 6 | 12 | 125 | 707,1 | 1:58,9 |
| 1_C | 6 | 12 | 250 | 1414,2 | 1 :117,9 |
| 2_A | 8 | 9 | 400 | 282,8 | 1:31,4 |
| 2_B | 8 | 12 | 250 | 707,1 | 1:58,9 |
| 2_C | 8 | 18 | 200 | 1414,2 | 1:78,6 |
| 3_A | 10 | 12 | 250 | 282,8 | 1:23,6 |
| 3_B | 10 | 15 | 250 | 707,1 | 1:47,1 |
| 3_C | 10 | 18 | 312 | 1414,2 | 1:78,6 |

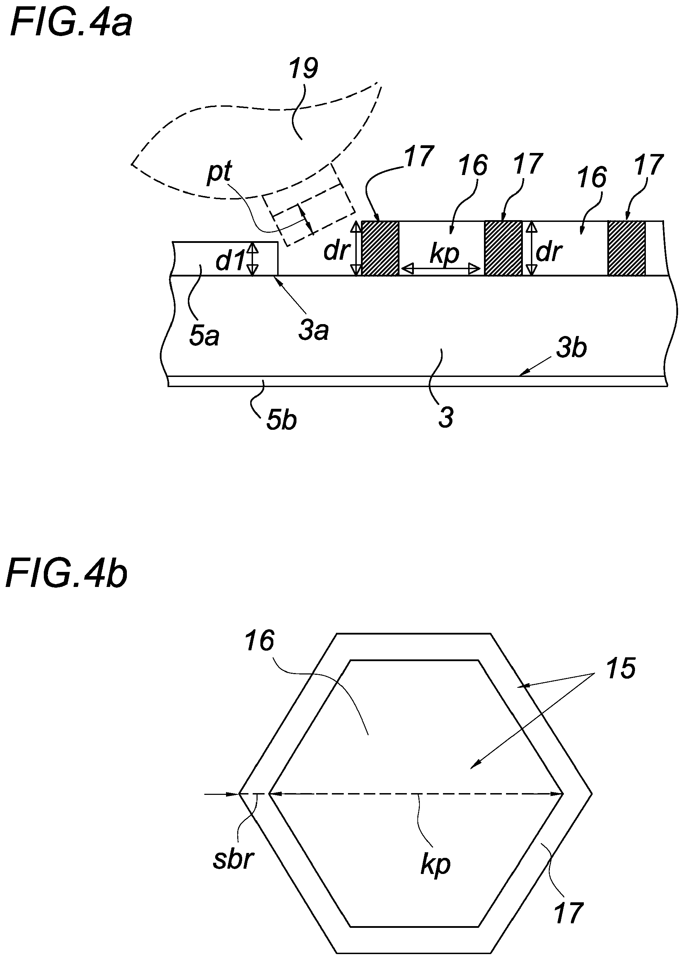

Alle Reliefs 15 nach 1_A bis 3_C weisen Vertiefungen 16 und von sich diesen Vertiefungen 16 abhebende Reliefstrukturen 17 auf, wie den Figuren 2, 2a, 4a und 4b zu erkennen.

Da das Prägewerkzeug 19 eine Prägetiefe pt kleiner gleich der Schichtdicke d1 der ersten Schmelzklebelackschicht 5a aufweist, können die Vertiefungen 16 in der ersten Schmelzklebelackschicht 5a bis an das Blech des Blechteils 4 heranreichen, wie beispielsweise in der Fig. 4a dargestellt. Es ist aber auch vorstellbar, dass an den Vertiefungen 16 das Blech des Blechteils 4 von der ersten Schmelzklebelackschicht 5a vollflächig abgedeckt ist.

Gemäß Tabelle 1 bewegen sich nach 1_A bis 3_C die Strukturhöhe dr der Reliefstrukturen 17 im Bereich von 1,1- bis 5-mal der Schichtdicke d1 der ersten Schmelzklebelackschicht 5a vor dem Prägen. Die Reliefstrukturen 17 nach 1_A bis 3_C weisen zudem eine Strukturbreite sbr von mindestens 50 µm auf. Zudem weisen die Vertiefungen 16 eine maximale Vertiefungsweite kp zwischen zwei nacheinander angeordneten Reliefstrukturen 17 von mindestens 200 µm auf.

Damit unterbrechen die erfindungsgemäßen Reliefs 15 nach 1_A bis 3_C herstellungsbedingte Schwankungen S in der Schichtdicke d2 der zweiten Schmelzklebelackschicht 5b, wie solche in Fig. 3 erkannt werden könnten. Zudem können diese erfindungsgemäßen Reliefs 15 nach 1_A bis 3_C auch herstellungsbedingte Unebenheiten des Blechteils ausgeglichen werden, was nicht näher dargestellt worden ist.

Eine Ausbildung von kanalartigen Verbindungen in der Verklebung zwischen zwei Blechteilen 4 wird damit standfest verhindert. Eine Leckage von Kühlflüssigkeit ist sohin selbst bei vergleichsweise hohen hydraulischen Drücken nicht zu befürchten, wie in Tabelle 2 an den erfindungsgemäßen Versuchen V3 bis V12 zu erkennen ist.

**Tabelle 2: diverse Druckprüfungen**

| | Relief | Schichtdicke d2 [µm] | Maximaler Flüssigkeitsdruck [bar] |
|---|---|---|---|
| V1 | - | 4 | 0,1 |
| V2 | - | 6 | 0,2 |
| V3 | 1_A | - | 18 |
| V4 | 1_A | 1 | 18 |
| V5 | 1_B | 1 | 15 |
| V6 | 1_C | 1 | 15 |
| V7 | 2_A | - | 18 |
| V8 | 2_A | 1 | 18 |
| V9 | 2_B | 1 | 15 |
| V10 | 2_C | 1 | 15 |
| V11 | 3_C | - | 15 |
| V12 | 3_A | 1 | 18 |
| V13 | 3_B | 1 | 18 |
| V14 | 3_C | 1 | 18 |

Für die nach Tabelle 2 hergestellten Blechpaketen nach den Versuchen V1 bis V14 wurde ein Elektroblech mit der Blechdicke von 0,25 mm (Millimeter) verwendet, das entweder einseitig mit der ersten Schmelzklebelackschicht 5a (mit der Schichtdicke d1) oder beidseitig mit der ersten Schmelzklebelackschicht 5a (mit der Schichtdicke d1) auf der ersten Bandflachseite 3a und mit der ersten Schmelzklebelackschicht 5b (mit der Schichtdicke d2) auf der zweiten Bandflachseite 3b beschichtet ist. Als Schmelzklebelackschicht 5a und 5b wurde EB549 der Fa. Rembrandtin verwendet. Hierbei handelt es sich um einen thermisch aktivierbaren Schmelzklebelack mit einer Epoxydharzbasis.

Alle nach den Versuchen V1 bis V14 hergestellten Blechpakete 2 wurden unter den gleichen geometrischen Vorgaben mithilfe der Vorrichtung 1 hergestellt. Des Weiteren wurden alle nach den Versuchen V1 bis V14 hergestellten Blechpakete 2 für 2 h (Stunden) bei 200 °C (Grad Celsius) und einem Druck P von 3 N/mm² (Newton pro Quadratmillimeter) verklebt. Der Abstand des Kühlkanals zur Außenkontur des Blechpakets 2 betrug 2 mm.

Deutlich ist nach Tabelle 2 an den erfindungsgemäßen Blechpaketen (V3 bis V14) eine höhere Druckbeständigkeit, nämlich mehr als das 100-fache beim maximalen Flüssigkeitsdruck zu erkennen, als dies beim Stand der Technik gemäß dem Versuch V1 der Fall ist. Selbst die Erhöhung der Backlackschicht des Blechpakets V2 unter Druck erreichte weniger als ein Fünfzigstel des maximalen Flüssigkeitsdrucks der erfindungsgemäßen Blechpakete 2 nach den Versuchen V3 bis V14.

Außerdem ist, wie in der Fig. 3 insbesondere zu entnehmen, bei jedem vereinzelten Blechteil 4 die Schichtdicke d1 der ersten Schmelzklebelackschicht 5a größer als dies bei der zweiten planen Schmelzklebelackschicht 5b mit der Schichtdicke d2 der Fall ist.

Das Relief 15 ist besonders formgenau in der ersten Schmelzklebelackschicht 5a vorgesehen. Dies ist bei einem vergleichsweise kleinen Verhältnis von Strukturhöhe sbr der Reliefstrukturen 17 zu maximalen Vertiefungsweite kp der Vertiefungen 16 von kleiner 1:200 von besonderem Vorteil, wie dies in bei allen Versuchen der Fall ist. Besonders hohe Dichtheit als auch die Abdichtung von kleinsten Fehlstellen oder Unebenheiten können durch das Verhältnis im Bereich von 1:20 bis 1:50 realisiert werden, wie in Versuchen 1_A, 2_A, 3_A und 3_B dargestellt.

Für dieses formgenaue Vorsehen trägt bei, dass vor der Prägewalze 16 die erste Schmelzklebelackschicht 5a mit einer Strahlungsquelle 18, beispielsweise IR-Quelle, auf eine erste Temperatur t1 erwärmt wird. Diese erste Temperatur beträgt 80 °C und ist größer der Glasübergangstemperatur (Tg) des Schmelzklebelacks der Schmelzklebelackschicht 5a und kleiner der Verbackungstemperatur des Schmelzklebelacks der Schmelzklebelackschicht 5a. Zudem ist auch die Prägewalze 16 auf die gleiche zweite Temperatur t2, nämlich 80 °C, erwärmt, was die Homogenität des geprägten Reliefs 15 weiter erhöht. Damit kann beispielsweise ein Muster mit einer gleichmäßigen und periodischen Struktur, nämlich Wabenmuster, äußerst genau und fein ausbildet werden, wie solch ein Wabenmuster in Fig. 2 zu erkennen ist.

Zu erkennen in Fig. 2 ist auch, dass das Relief 15 vollständig um den Kühlkanal 14 verläuft. Damit ist kann dieser besonders abgedichtet werden.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Verbinden von Blechteilen (4) zu zumindest einem Blechpaket (2), bei dem
Blechteile (4), die jeweils an ihrer ersten Flachseite (4a) eine erste, vorzugsweise vollflächig vorgesehene und/oder thermisch aktivierbare, Schmelzklebelackschicht (5a), insbesondere Backlack, aufweisen, gestapelt und
durch Aktivierung der Schmelzklebelackschichten (5a) zum Blechpaket (2) verklebt werden,
**dadurch gekennzeichnet, dass**
Blechteile (4) gestapelt werden, die an ihren ersten Schmelzklebelackschichten (5a) zumindest bereichsweise, insbesondere vollflächig, ein durch Prägen erzeugtes Relief (15) aufweisen.

2. Verfahren nach Anspruch 1, **dadurch gekennzeichnet, dass** das Relief (15) Vertiefungen (16) und von diesen Vertiefungen (16) sich abhebende Reliefstrukturen (17) aufweist.

3. Verfahren nach Anspruch 2, **dadurch gekennzeichnet, dass** die Reliefstrukturen (17) eine Strukturhöhe (dr) von mindestens 5 µm und/oder eine Strukturhöhe (dr) im Bereich von 1,1- bis 5-mal, insbesondere 1,5- bis 3-mal, der Schichtdicke (d1) der ersten Schmelzklebelackschicht (5a) vor deren Prägung aufweisen.

4. Verfahren nach Anspruch 2 oder 3, **dadurch gekennzeichnet, dass** die Reliefstrukturen (17) eine Strukturbreite (sbr) von mindestens 50 µm aufweisen.

5. Verfahren nach Anspruch 2, 3 oder 4, **dadurch gekennzeichnet, dass** die Vertiefungen (16) eine maximale Vertiefungsweite (kp) zwischen zwei nacheinander angeordneten Reliefstrukturen (17) von mindestens 200 µm, insbesondere mindestens 500 µm, aufweisen.

6. Verfahren nach einem der Ansprüche 2 bis 5, **dadurch gekennzeichnet, dass** das Verhältnis von Strukturhöhe (sbr) der Reliefstrukturen (17) zur maximalen Vertiefungsweite (kp) der Vertiefungen (16) kleiner 1:200 ist, insbesondere im Bereich von 1:20 bis 1:120, beispielsweise im Bereich von 1:20 bis 1:50, liegt.

7. Verfahren nach einem der Ansprüche 1 bis 6, **dadurch gekennzeichnet, dass** das Relief (15) ein Muster mit einer regelmäßigen, insbesondere periodischen, Struktur, insbesondere Noppenmuster, Rillenmuster, Gittermuster, Schachbrettmuster, Waffelmuster oder Wabenmuster, ausbildet.

8. Verfahren nach einem der Ansprüche 1 bis 7, **dadurch gekennzeichnet, dass** jedes Blechteil (4) an seiner zweiten, der ersten Flachseite (4a) gegenüberliegenden Flachseite (4b) eine zweite Schmelzklebelackschicht (5b) aufweist.

9. Verfahren nach Anspruch 8, **dadurch gekennzeichnet, dass** die zweite Schmelzklebelackschicht (5b) plan ausgebildet ist und/oder dass die zweite Schmelzklebelackschicht (5b) eine Schichtdicke (d2) im Bereich von 0,5 bis kleiner 2 µm, insbesondere von 1 bis 1,5 µm, aufweist.

10. Verfahren nach einem der Ansprüche 1 bis 9, **dadurch gekennzeichnet, dass** beim Stapeln und/oder nach dem Stapeln, insbesondere beim Verkleben, der Blechteile (4) ein Druck (P), insbesondere zumindest 2 N/mm², auf die Blechteile (4) aufgebracht wird.

11. Verfahren nach einem der Ansprüche 1 bis 10, **dadurch gekennzeichnet, dass** mit einem Prägewerkzeug (19), insbesondere mit einer Prägewalze und/oder einem Prägestempel, die erste Schmelzklebelackschicht (5a) geprägt wird und/oder dass das Prägewerkzeug (19) die erste Schmelzklebelackschicht (5a) mit einer Prägetiefe (pt) kleiner gleich ihrer Schichtdicke (d1) prägt.

12. Verfahren nach einem der Ansprüche 1 bis 11, **dadurch gekennzeichnet, dass** die erste Schmelzklebelackschicht (5a) eine Schichtdicke (d2) von größer gleich 2 µm, insbesondere im Bereich von 2 bis 12 µm, aufweist.

13. Verfahren nach einem der Ansprüche 1 bis 12, **dadurch gekennzeichnet, dass** die Schmelzklebelackschicht auf eine erste Temperatur (t1) erwärmt wird und dann das Relief (15) erzeugt wird und/oder dass das Relief (15) mit einem auf eine zweite Temperatur (t2) erwärmten Prägewerkzeug (19) erzeugt wird.

14. Verfahren nach Anspruch 13, **dadurch gekennzeichnet, dass** die erste und/oder zweite Temperatur (t1, t2) größer der Glasübergangstemperatur (Tg) des Schmelzklebelacks und kleiner der Verbackungstemperatur des Schmelzklebelacks ist.

15. Verfahren nach einem der Ansprüche 1 bis 14, **dadurch gekennzeichnet, dass** die Blechteile (4) von zumindest einem Elektroband oder -blech (3), das an seiner ersten Bandflachseite (3a) die erste, vorzugsweise vollflächig vorgesehene und/oder thermisch aktivierbare, Schmelzklebelackschicht (5a), insbesondere Backlackschicht, vereinzelt werden.

16. Verfahren nach Anspruch 15, **dadurch gekennzeichnet, dass** das Elektroband oder -blech (3) an seiner zweiten Bandflachseite (3b) die zweite, vorzugsweise vollflächig vorgesehene und/oder thermisch aktivierbare, Schmelzklebelackschicht (5b), insbesondere Backlackschicht, aufweist.

17. Verfahren nach Anspruch 15 oder 16, **dadurch gekennzeichnet, dass** das Relief (15) vor dem Vereinzeln der Blechteile (4) an der ersten Schmelzklebelackschicht (5b) erzeugt wird, insbesondere vor einem Folgestanzwerkzeug zum Vereinzeln der Blechteile (4).

18. Verfahren nach einem der Ansprüche 1 bis 17, **dadurch gekennzeichnet, dass** das Blechpaket (2) einen Kühlkanal (14) zur Führung einer Kühlflüssigkeit aufweist und/oder dessen Paketmantel abschnittsweise einen Kühlkanal zur Führung einer Kühlflüssigkeit ausbildet.

19. Blechpaket, hergestellt nach dem Verfahren nach einem der Ansprüche 1 bis 18, **dadurch gekennzeichnet, dass** die von den ersten Schmelzklebelackschichten (5a) oder den ersten und zweiten Schmelzklebelackschichten (5a, 5b) ausgebildete Verklebung zwischen den Blechteilen (4) des Blechpakets (1) zumindest bereichsweise ein Relief (15) aufweist.
